# EUROPÄISCHE PATENTANMELDUNG

(11) **EP 2 518 362 A1**
(43) Veröffentlichungstag der Anmeldung: **31.10.2012**
(21) Anmeldenummer: 12002569.7
(22) Anmeldetag: 12.04.2012
(51) Int. Cl.: F16D 65/12

(54) **Bremsscheibe, insbesondere aus Grauguss**

(30) Priorität: 26.04.2011 DE 102011018575
(71) Anmelder: AUDI AG, 85045 Ingolstadt (DE)
(72) Erfinder: Yarim, Rasim, 85053 Ingolstadt (DE); Kerner, Bernhard, 85098 Grossmehring (DE); Weinberger, Georg, 93358 Train (DE)
(74) Vertreter: Asch, Konrad

(57) **Zusammenfassung**

Bremsscheibe für eine Kraftfahrzeug-Scheibenbremse, insbesondere aus Grauguss, mit einer an wenigstens einer Seite ausgebildeten spiralförmig verlaufenden Rille und einem verbleibenden, entsprechend spiralförmig umlaufenden Steg, wobei der Steg (6) derart eingeebnet ist, dass sich eine Stegoberfläche (A_{S}) ergibt, die wenigstens 60% der Gesamtoberfläche (A_{G}) aus Stegoberfläche (A_{S}) und Rillenoberfläche (A_{R}) beträgt.

## Beschreibung

Die Erfindung betrifft eine unbenutzte, fabrikneue Bremsscheibe für eine Kraftfahrzeug-Scheibenbremse, insbesondere aus Grauguss, mit einer an wenigstens einer Seite ausgebildeten spiralförmig verlaufenden Rille und einem verbleibenden, entsprechend spiralförmig umlaufenden Steg.

Scheibenbremsen für Kraftfahrzeuge, seien es solche für Automobile und LKWs oder für Zweiräder, bestehen üblicherweise aus Metall, zumeist Graugussmaterial, oder auch Stählen. Nach der Herstellung des Scheibenkörpers, also beispielsweise nach dem Guss, ist die oder sind die Reibflächen der Scheibe noch zu bearbeiten, um die erforderliche Ebenflächigkeit herzustellen. Hierzu erfolgt üblicherweise eine spanabhebende Nachbearbeitung, zumeist durch Feindrehen der Oberfläche. Hierbei wird ein Werkzeug, üblicherweise ein Fräser, von außen radial zum Scheibeninneren bewegt, wobei der Fräser mit seiner Schneide Scheibenmaterial abhebt. Infolge des Vorschubs des Werkzeugs relativ zur rotierenden Scheibe kommt es dabei zwangsläufig zur Ausbildung einer mehr oder weniger feinen Rille, die sich spiralförmig von außen nach innen zieht, und entsprechend eines spiralförmig umlaufenden, die Rille begrenzenden Stegs. Dabei ist es bekannt, das Werkzeug mit zwei unterschiedlichen Vorschubgeschwindigkeiten zu bewegen, so dass beispielsweise zwei Abschnitte an der Scheibenoberfläche ausgebildet werden, in denen die Rille eine unterschiedliche Steigung aufweist. Beispielsweise wird radial außen mit einem geringeren Vorschub gearbeitet, so dass sich ein äußerer erster Bereich ergibt, während beispielsweise im Bereich der Scheibenmitte die Vorschubgeschwindigkeit erhöht wird, so dass sich zum Scheibeninneren hin ein zweiter Bereich bildet. Das heißt, dass die Scheibenlauffläche, auf der der Bremsbelag angreift, durch die verschiedenen Vorschubgeschwindigkeiten unterteilt ist, wobei diese unterschiedlichen Bereiche "Bremsbänder" genannt werden. In diesem Zusammenhang ist es beispielsweise aus DE 10 2006 017 207 A1 bekannt, diese beiden Bereiche mit unterschiedlichen Verlaufsrichtungen der Rille auszubilden, wobei in einem Bereich die Rille im Uhrzeigersinn und im anderen Bereich gegen den Uhrzeigersinn verläuft, was zu einem drehrichtungsunabhängigen Bremsverhalten führen soll.

Grundsätzlich ist eine Scheibenbremse im Neuzustand bei der Fahrzeugauslieferung einzubremsen, es sind also diverse Bremsmanöver durchzuführen, um den im Neuzustand noch relativ niedrigen Reibwert auf ein höheres, stabiles Niveau anzuheben. Der niedrige Reibwert resultiert aus der Scheibenbearbeitung durch das Feindrehen. Denn wie beschrieben wird hierdurch die Rillenstruktur erzeugt, verbunden damit aber auch der Steg. Dieser Steg weist, querschnittlich gesehen, eine mehr oder weniger dreieckige, zumindest aber leicht spitz zulaufende Form auf. Das heißt, dass die effektive Oberfläche, an der im Neuzustand, also zu Beginn des Einbremsvorgangs, der Bremsbelag reibend angreift, noch relativ klein ist. Durch die Einbremsmanöver wird nun der Spitzenbereich des Stegs relativ schnell abgetragen, so dass sich der Reibwert erhöht.

Der Einbremsvorgang wird neben dem Belastungskollektiv und dem Material des Bremsbelags auch wesentlich durch die Oberflächenbeschaffenheit der Bremsscheibe beeinflusst. Häufig zeigt das Fahrzeug unterschiedliche Reibwerte auf der linken und rechten Fahrzeugseite, das heißt, dass die im Automobil links und rechts verbauten Scheibenbremsen, aus ihrer Oberflächenbearbeitung resultierend, unterschiedliche Reibeigenschaften zeigen. Dies führt während des Fahrbetriebs zum "Schiefziehen" des Fahrzeugs, da das Fahrzeug unterschiedlich stark auf den jeweiligen Seiten verzögert wird. Dieses unterschiedliche Verzögerungsverhalten stellt eine potentielle Gefahrenquelle dar, im Extremfall kann das Fahrzeug bremsbedingt stark von der Spur abweichen und unter Umständen sogar die Fahrbahn verlassen.

Der Erfindung liegt damit das Problem zugrunde, eine Bremsscheibe anzugeben, mit welcher sichergestellt werden kann, dass es während der Einbremsphase nicht zu nennenswerten Reibwertunterschieden zwischen fahrzeugverbauten Bremsscheiben kommt.

Zur Lösung dieses Problems ist bei einer fabrikneuen Bremsscheibe der eingangs genannten Art erfindungsgemäß vorgesehen, dass der Steg derart eingeebnet ist, dass sich eine Stegoberfläche ergibt, die wenigstens 60 % der Gesamtoberfläche aus Stegoberfläche und Rillenoberfläche beträgt.

Bei der erfindungsgemäßen Bremsscheibe wird die oder werden die Scheibenoberflächen während der Nachbearbeitung derart bearbeitet, dass sich nicht die wie bisher im Stand der Technik stets übliche spitz zulaufende Stegform ergibt, sondern eine eingeebnete Stegoberfläche. Denn es hat sich herausgestellt, dass gerade die bisher unzulängliche Stegform ausschlaggebend für das mitunter nachteilige Einbremsverhalten ist. Diesem Umstand wird nun durch die erfindungsgemäße Einebnung der Stegoberfläche entgegengewirkt. Die Rillen und der Steg werden dabei derart ausgebildet respektive eingebracht, dass die Stegoberfläche wenigstens 60 % der Gesamtoberfläche aus Stegoberfläche und Rillenoberfläche beträgt. Betrachtet man also die Gesamtoberfläche im Bereich des Bremsbandes, also in dem Bereich, in dem an der Bremsscheibe überhaupt die Rillenstruktur ausgebildet ist, welche Gesamtoberfläche sich additiv aus der Oberfläche der in die Tiefe gehenden Rille und der Oberfläche des Stegs ergibt, so beträgt hiervon die Stegoberfläche mindestens 60 %.

Nachdem bei der erfindungsgemäßen Bremsscheibe bereits im Neuzustand eine derart große, ebene Stegoberfläche ausgebildet ist, und diese Stegoberfläche auf allen verbauten Bremsscheiben gegeben ist, ergibt sich folglich an allen Bremsen des Kraftfahrzeugs bereits im Neuzustand und damit zu Beginn des Einbremsvorgangs eine große reale Kontakt- oder Reibfläche zum jeweiligen Bremsbelag. Das heißt, dass damit auch zwangsläufig während des Einbremsvorgangs der jeweilige Steg nur noch unwesentlich "abzubremsen" ist, da jede Bremsscheibe von Haus aus aufgrund der hohen Kontaktfläche resultierend aus der großen Stegoberfläche einen hinreichend hohen Reibwert aufweist.

Damit ergibt sich, dass durch Einsatz der erfindungsgemäßen Bremsscheibe die eingangs genannten Probleme während des Einbremsvorgangs nicht mehr gegeben sind und es infolgedessen zu keinen oder nur vernächlässigbaren Verzögerungsunterschieden kommt.

Die Stegoberfläche sollte in Weiterbildung der Erfindung wenigstens 75 % der Gesamtoberfläche betragen, bevorzugt aber noch mehr, beispielsweise 80 % oder insbesondere wenigstens 90 % der Gesamtoberfläche.

Das verwendete Schneidwerkzeug, üblicherweise ein Keramikfräser, oder ein CBN-Fräser (CBN = kubisches Bornitrid), weist an seiner Schneide einen Radius auf, der erforderlich ist, um einen Ausbruch an der Schneidkante zu vermeiden. Ein solcher Radius findet sich zwangsläufig auch am Grund der Rille wieder. Während im Stand der Technik in der Regel große Schneidradien mit Wert ≥ 1,5 mm verwendet werden, sieht die Erfindung vor, dass der Radius der Rille ≤ 1,0 mm, insbesondere ≤ 0,8 mm ist. Durch Verwendung eines relativ geringen Schneidradius wird erreicht, dass in Verbindung mit einem entsprechend gewählten Vorschub grundsätzlich eine hinreichende Stegbreite gegeben ist, so dass sich durch die Einebnung die gewünschte Stegoberfläche im Bereich von wenigstens 60 % ergibt. Zwar wird durch Verwendung eines kleinen Schneidradius gegebenenfalls etwas mehr Zeit zur Scheibenbearbeitung benötigt. Jedoch ist, was ein weiterer beachtlicher Vorteil der erfindungsgemäßen Bremsscheibe ist, die Ausbildung zweier unterschiedlicher Bänder, wie im Stand der Technik häufig üblich, nicht erforderlich, worüber wiederum Bearbeitungszeit eingespart wird. Denn aufgrund der Einebnung der Stegoberseite und daraus resultierend der Erzeugung der großen Stegoberfläche sind keine unterschiedlichen Bänder zu erzeugen.

Bevorzugt sind die Rille und der eingeebnete Steg in einem einzigen Arbeitsgang erzeugt, das heißt, dass das Schneidwerkzeug einmal über die Scheibenoberfläche fährt, wobei sowohl die Rille als auch der oberflächlich eingeebnete Steg ausgebildet werden. Bevorzugt wird hierzu ein Schneidwerkzeug mit Schleppschneide verwendet, das heißt, dass die Strukturausbildung durch Feindrehen erfolgt. Als Schneidwerkzeug wird üblicherweise eine Wendeplatte verwendet, die üblicherweise vier Schneidecken aufweist, denen jeweils beidseits die Schleppschneiden nebengeordnet sind. Während die Schneidkante die Rillenstruktur ausbildet, trägt eine Schleppschneide das Stegmaterial ab, so dass sich die erfindungsgemäße Struktur ergibt. Durch diese einzügige Bearbeitung durch Feindrehen oder Feinschlichten unter Verwendung des Schneidwerkzeugs mit Schleppschneide kann also in einem einzigen Arbeitsgang die Bremsscheibenoberfläche in der gewünschten Güte hergestellt werden.

Neben der Bremsscheibe selbst betrifft die Erfindung ferner ein Verfahren zur Herstellung einer Bremsscheibe, insbesondere einer Graugussbremsscheibe, mit einer an wenigstens einer Seite ausgebildeten spiralförmig umlaufenden Rille und entsprechend spiralförmig umlaufendem Steg, bei welchem Verfahren mittels eines Schneidwerkzeugs durch Feindrehen die Rille erzeugt und gleichzeitig der Steg derart abgetragen und eingeebnet wird, dass die Stegoberfläche wenigstens 60 % der Gesamtoberfläche aus Stegoberfläche und Rillenoberfläche beträgt.

Vorzugsweise erfolgt die Bearbeitung derart, dass die Stegoberfläche wenigstens 75 %, insbesondere wenigstens 90 % beträgt.

Als Schneidwerkzeug wird ein Werkzeug mit Schneidkante und zugeordneter Schleppschneide verwendet.

Dabei sollte der Schneidradius an der Schneidkante ≤ 1,0 mm, insbesondere ≤ 0,8 mm sein.

Der Vorschub des Schneidwerkzeugs sollte ≤ 0,8 mm pro Scheibenumdrehung, insbesondere ≤ 0,5 mm pro Scheibenumdrehung sein, ein bevorzugter Wert ist 0,4 mm pro Scheibenumdrehung.

Die Schnittgeschwindigkeit während der spanabhebenden Feinbearbeitung sollte wenigstens 400 m/min, insbesondere wenigstens 1400 m/min betragen.

Als Schneidwerkzeug kann ein Werkzeug aus Schneidkeramik verwendet werden, beispielsweise auf Siliziumbasis wie beispielsweise aus Siliziumnitridkeramik, oder auf Aluminiumoxidbasis, wobei auch Mischkeramik aus Aluminiumoxid und Hartstoffen wie Titancarbid oder Wolframcarbid und Ähnliches verwendet werden kann. Daneben kann, erfindungsgemäß bevorzugt, auch ein Schneidwerkzeug aus kubischem Bornitrid, das hauptsächlich zur Bearbeitung von harten und abrasiven Eisenwerkstoffen, wie hier gegeben, verwendet wird, eingesetzt werden. Die Aufzählung der verwendeten Schneidwerkstoffe ist nicht beschränkend, sondern lediglich exemplarisch.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Schnittansicht durch eine erfindungsgemäße Bremsscheibe,
- Fig. 2: eine Aufsicht auf eine Seite der Bremsscheibe aus Fig. 1, und
- Fig.3: eine Schnittansicht durch die Bremsscheibe in Richtung der Linie III - III aus Fig. 2 in einer Teilansicht.

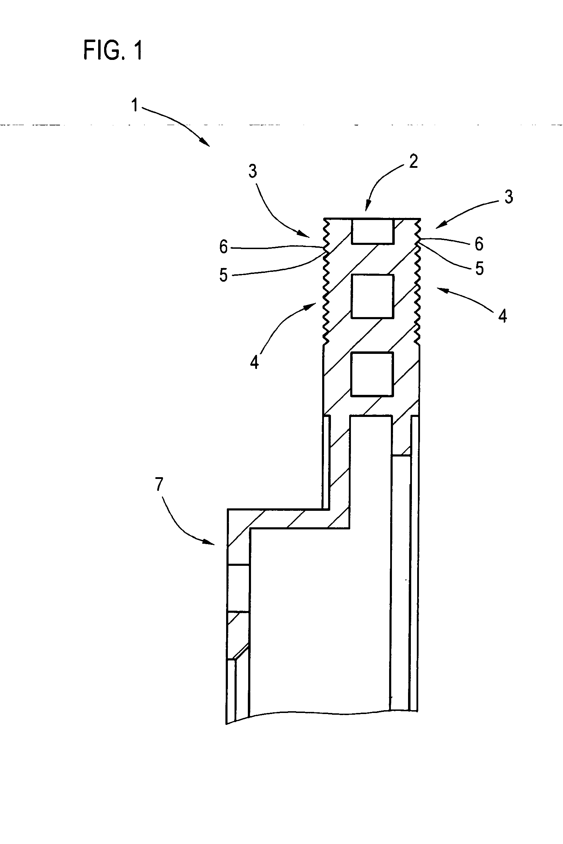

Fig. 1 zeigt eine erfindungsgemäße fabrikneue Bremsscheibe 1, die nach dem erfindungsgemäßen Verfahren hergestellt wurde, wie sie beispielsweise für ein Automobil verwendet wird. Die Bremsscheibe 1 besteht vorzugsweise aus Grauguss. Sie weist den eigentlichen Scheibenkörper 2 auf, an dessen beiden Seitenflächen 3 jeweils ein einziges Bremsband 4 mittels einer spiralförmig von außen nach innen verlaufenden Rille 5 und einem entsprechenden, spiralförmig verlaufenden Steg 6 ausgebildet ist. Die jeweiligen Bremsbänder 4 beziehungsweise Rillen 5 und Stege 6 sind in Fig. 1 nur angedeutet. An den beiden Bremsbändern 4 greifen im verbauten Zustand während des Bremsens entsprechende Bremsbeläge an, wie hinlänglich bekannt ist. Vom Grundkörper 2 geht, radial gesehen nach innen, ein Befestigungsflansch 7 ab, mit dem die Bremsscheibe 1 an der Radnabe befestigt wird.

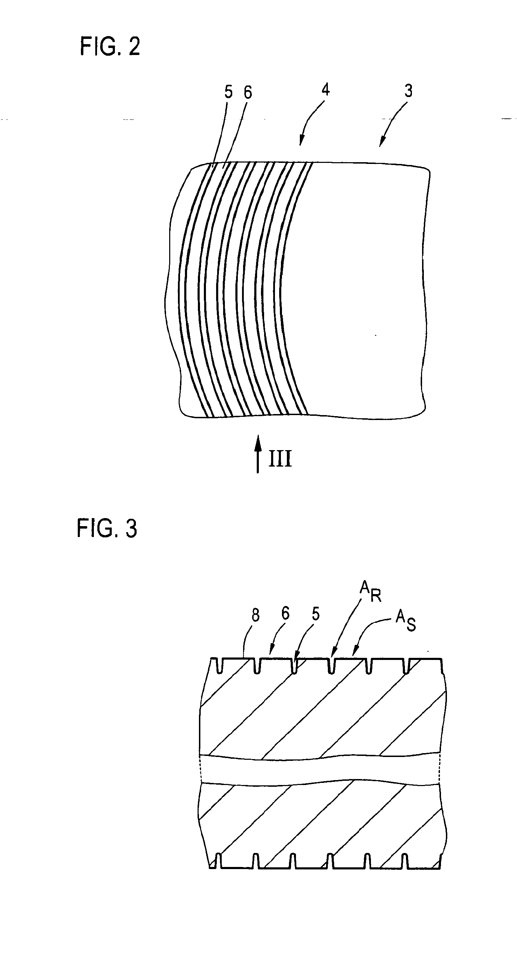

Fig. 2 zeigt in vergrößerter Darstellung eine Aufsicht auf eine Bremsscheibenseite 3 unter vergrößerter Darstellung des Bremsbandes 4. Ersichtlich ist die sich spiralförmig von außen nach innen ziehende Rille 5 sowie der entsprechende, sich ebenfalls spiralförmig von außen nach innen ziehende, die Rille 5 begrenzende Steg 6.

Bei der erfindungsgemäßen Bremsscheibe ist nun bereits im Neuzustand eine bestimmte Ausbildung der Struktur aus Rille und Steg vorgesehen, wie sich deutlich aus Fig. 3 ergibt. In Fig. 3 ist eine Schnittansicht durch einen Teil der Bremsscheibe gezeigt, um die konkrete Struktur, wenngleich deutlich vergrößert, prinzipiell darzustellen. Gezeigt ist die Rille 5 sowie der jeweilige Steg 6. Die Rille 5 wie auch der Steg 6, mithin also das jeweilige Band 4, wird in einem einzigen Arbeitsgang unter Verwendung eines Schneidwerkzeugs mit Schneidkante und zugeordneter Schleppschneide erzeugt. Die Rille 5 weist im Rillengrund eine Rundung auf, deren Radius bevorzugt ≤ 0,8 mm ist. Die Rille 5 selbst ist relativ schmal, verglichen mit dem relativ breiten Steg 6.

Der Steg 6 selbst ist an seiner Oberfläche 8 eingeebnet, er läuft also, anders als im Stand der Technik, nicht ähnlich spitz aus, wie die Rille 5, sondern bildet eine Art Plateau. Diese ebene Stegoberfläche wird mittels der genannten Schleppschneide gleichzeitig mit der Rille 5 ausgebildet.

Die Ausbildung der Rille 5 und des Stegs 6 mit seiner eingeebneten Oberfläche 8 erfolgt nun erfindungsgemäß derart, dass sich ein bestimmtes Verhältnis von Stegoberfläche zur Rillenoberfläche einstellt, dass also mithin die Stegoberfläche einen bestimmten Mindestanteil an der Gesamtoberfläche der Bremsscheibenseite beträgt.

Die Gesamtoberfläche der Bremsseitenscheibe errechnet sich aus der Gesamtoberfläche A_{R} der kompletten spiralförmig umlaufenen Rille 5 sowie der Gesamtoberfläche A_{S} des eingeebneten Stegs 6, das heißt, dass die Gesamtoberfläche A_{G} sich ergibt zu A_{G} = A_{R} + A_{S}.

Die Ausbildung der Rille 5 und des Stegs 6 erfolgt nun derart, dass die Stegoberfläche A_{S} wenigstens 60 % der Gesamtoberfläche A_{G} beträgt, bevorzugt deutlich mehr, im Idealfall wenigstens 90 % der Gesamtoberfläche. Die Rille wird relativ schmal und/oder relativ flach ausgebildet wird, verglichen zum relativ breiten Steg 6.

Das heißt, dass jede neuwertige Bremsscheibe von Haus aus eine hohe aktive Kontaktfläche, nämlich die Stegoberfläche 8 mit ihrer Fläche A_{S} aufweist, die unmittelbar zu Beginn der Einbremsphase des die erfindungsgemäßen Bremsscheiben aufweisenden Fahrzeugs aktiv mit dem Bremsbelag zusammenwirkt. Jede Bremsscheibe weist also von Haus aus bereits einen beachtlich hohen Reibwert auf, so dass sich ein sehr homogenes Verzögerungsverhalten über alle verbauten Bremsscheiben ergibt. Die Einbremszeit der Bremse kann dadurch deutlich verkürzt werden, der Reibwert der Bremse respektive das Verzögerungsverhalten des gesamten Bremssystems stabilisiert sich damit in kürzester Zeit, verglichen mit bisherigen Bremsscheiben, bei denen wie beschrieben die Stege spitz auslaufen.

## Patentansprüche

1. Bremsscheibe für eine Kraftfahrzeug-Scheibenbremse, insbesondere aus Grauguss, mit einer an wenigstens einer Seite ausgebildeten spiralförmig verlaufenden Rille und einem verbleibenden, entsprechend spiralförmig umlaufenden Steg,
**dadurch gekennzeichnet,**
**dass** im Neuzustand der Bremsscheibe der Steg (6) derart eingeebnet ist, dass sich eine Stegoberfläche (A_{S}) ergibt, die wenigstens 60% der Gesamtoberfläche (A_{G}) aus Stegoberfläche (A_{S}) und Rillenoberfläche (A_{R}) beträgt.

2. Bremsscheibe nach Anspruch 1,
**dadurch gekennzeichnet,**
**dass** die Stegoberfläche (A_{S}) wenigstens 75% der Gesamtoberfläche (A_{G}) beträgt.

3. Bremsscheibe nach Anspruch 2,
**dadurch gekennzeichnet,**
**dass** die Stegoberfläche (A_{S}) wenigstens 90% der Gesamtoberfläche (A_{G}) beträgt.

4. Bremsscheibe nach einem der vorangehenden Ansprüche,
**dadurch gekennzeichnet,**
**dass** der Radius der Rille ≤ 1,0 mm, insbesondere ≤ 0,8 mm ist.

5. Bremsscheibe nach einem der vorangehenden Ansprüche,
**dadurch gekennzeichnet,**
**dass** die Rille (5) und der eingeebnete Steg (6) in einem einzigen Arbeitsgang erzeugt sind.

6. Bremsscheibe nach Anspruch 5,
**dadurch gekennzeichnet,**
**dass** die Rille (5) und der eingeebnete Steg (6) durch Feindrehen mittels eines Schneidwerkzeugs mit Schleppschneide hergestellt ist.

7. Verfahren zur Herstellung einer Bremsscheibe nach einem der vorangehenden Ansprüche, insbesondere einer Graugussbremsscheibe, mit einer an wenigstens einer Seite ausgebildeten spiralförmig umlaufenden Rille und entsprechend spiralförmig umlaufendem Steg, bei welchem Verfahren mittels eines Schneidwerkzeugs durch Feindrehen die Rille (5) erzeugt und gleichzeitig der Steg (6) derart abgetragen und eingeebnet wird, dass die Stegoberfläche (A_{S}) wenigstens 60% der Gesamtoberfläche (A_{G}) aus Stegoberfläche (A_{S}) und Rillenoberfläche (A_{R}) beträgt.

8. Verfahren nach Anspruch 7,
**dadurch gekennzeichnet,**
**dass** die Stegoberfläche (A_{S}) wenigstens 75 % der Gesamtoberfläche (A_{G}) beträgt.

9. Verfahren nach Anspruch 8,
**dadurch gekennzeichnet,**
**dass** die Stegoberfläche (A_{S}) wenigstens 90 % der Gesamtoberfläche (A_{G}) beträgt.

10. Verfahren nach einem der Ansprüche 7 bis 9,
**dadurch gekennzeichnet,**
**dass** als Schneidwerkzeug ein Werkzeug mit Schneidkante und Schleppschneide verwendet wird.

11. Verfahren nach einem der Ansprüche 7 bis 10,
**dadurch gekennzeichnet,**
**dass** ein Scheidwerkzeug mit einem Schneidradius ≤ 1,0 mm, insbesonderte ≤ 0,8 mm an der Schneidkante verwendet wird.

12. Verfahren nach einem der Ansprüche 7 bis 11,
**dadurch gekennzeichnet,**
**dass** der Vorschub des Schneidwerkzeugs ≤ 0,8 mm pro Scheibenumdrehung, insbesondere ≤ 0,5 mm pro Scheibenumdrehung ist.

13. Verfahren nach einem der Ansprüche 7 bis 12,
**dadurch gekennzeichnet,**
**dass** die Schnittgeschwindigkeit wenigstens 400 m/min, insbesondere wenigstens 1400 m/min beträgt.

14. Verfahren nach einem der Ansprüche 7 bis 13,
**dadurch gekennzeichnet,**
**dass** ein Schneidwerkzeug aus kubischem Bornitrid verwendet wird.
